# EUROPÄISCHE PATENTSCHRIFT

(11) **EP 4 299 851 B1**
(45) Veröffentlichungstag und Bekanntmachung des Hinweises auf die Patenterteilung: **25.02.2026**
(21) Anmeldenummer: 22182500.3
(22) Anmeldetag: 01.07.2022
(51) Int. Cl.: E04F 11/18, H02S 20/23, H02S 20/24

(54) **DACHSYSTEM FÜR MINDESTENS EIN PHOTOVOLTAIKMODUL UND VERWENDUNG EINES DACHSYSTEMS**
ROOF SYSTEM FOR AT LEAST ONE PHOTOVOLTAIC MODULE AND USE OF A ROOF SYSTEM
SYSTÈME DE TOIT POUR AU MOINS UN MODULE PHOTOVOLTAÏQUE ET UTILISATION D'UN SYSTÈME DE TOIT

(43) Veröffentlichungstag der Anmeldung: 03.01.2024
(73) Patentinhaber: ABS Safety GmbH, 47623 Kevelaer (DE); Below0 GmbH, 47623 Kevelaer (DE)
(72) Erfinder: Borst, David, 04103 Leipzig (DE); Beckers, Stefan, 47652 Weeze (DE); Pastuska, Maurice, 47623 Kevelaer (DE)
(74) Vertreter: Seemann & Partner Patentanwälte mbB

(56) Entgegenhaltungen:
- FR-A1- 2 954 792
- FR-A1- 2 981 738
- KR-B1- 102 228 867
- US-A1- 2018 026 576

## Beschreibung

Die Erfindung betrifft ein Dachsystem für mindestens ein Photovoltaikmodul, wobei das Dachsystem auf einer Dachfläche, insbesondere einem Flachdach, anordbar oder angeordnet ist.

Ferner betrifft die Erfindung die Verwendung eines Dachsystems zur Anordnung von einer Absturzsicherung, insbesondere einem Absturzsicherungsgestell, und einem Photovoltaikmodul oder mehreren Photovoltaikmodulen auf einer Dachfläche, insbesondere einem Flachdach.

Es ist bekannt, dass auf Flachdächern von Gebäuden technische Anlagen wie beispielsweise Klima- und Lüftungsanlagen, Photovoltaikanlagen und thermische Solaranlagen oder Blitzschutz- und Antennensysteme angeordnet sind.

Solche technischen Anlagen werden z.B. auf gewerblich genutzten Immobilien betrieben, beispielsweise, aber nicht ausschließlich, auf Lagerhallen, Logistikzentren, Produktionsstätten, Sporthallen oder Veranstaltungshallen.

Für die Installation und Wartung von technischen Anlagen, insbesondere Photovoltaikanlagen, auf einer Dachfläche ist es notwendig, dass Fachpersonal die Dachfläche betritt. Dafür sind Wartungswege abzusichern, zum Beispiel mittels Absturzsicherungen. Diese, vorzugweise eine rechteckige oder eine Torbogen-förmige Grundform aufweisend, sichern als Kollektivschutzsystem Personen im absturzgefährdeten Bereich, zum Beispiel als Geländer, oder als Individualschutzsystem eine einzelne Person ab. Absturzsicherungen können einerseits einen Absturz verhindern, beispielsweise mittels einer Umwehrung, insbesondere einem Geländer. Andererseits können Absturzsicherungen Personen im Falle eines Absturzes auffangen, insbesondere mittels eines Schienen- oder Seilsicherungssystems in Kombination mit einer persönlichen Schutzausrüstung, wie beispielsweise einem Auffanggurt mit Falldämpfer.

Üblicherweise werden die unterschiedlichen auf einer Dachfläche angeordneten Komponenten, wie beispielsweise technische Anlagen oder Absturzsicherungen, einzeln an der Dachfläche befestigt.

Dazu sind auf Flachdächern Befestigungen mittels Dachdurchdringung, wobei zur Verankerung in die Oberflächenbeläge und die Dachkonstruktion gebohrt wird, vorgesehen.

KR 102 228 867 B1 offenbart ein multifunktionales Dachabdichtungssystem aus Stahl. Es ist beispielsweise vorgesehen, dass Photovoltaikmodule mittels Brücken an einer wasserdichten Brückenunterstützungseinheit auf einer Dachfläche angeordnet sind.

Ausgehend von diesem Stand der Technik besteht eine Aufgabe der Erfindung darin, eine einfache und sichere Anordnung einer Absturzsicherung sowie von weiteren technischen Einrichtungen, wie z.B. Photovoltaikanlagen, auf einer Dachfläche eines Gebäudes zu gewährleisten.

Die Aufgabe wird gelöst durch ein Dachsystem für mindestens ein Photovoltaikmodul, wobei das Dachsystem auf einer Dachfläche, insbesondere einem Flachdach, anordbar oder angeordnet ist, wobei das Dachsystem eine Absturzsicherung, insbesondere ein Absturzsicherungsgestell, aufweist, wobei insbesondere die Absturzsicherung eine Umwehrung, insbesondere ein Geländer oder ein Gitter oder ein Seitenschutz, und/oder eine Individualabsturzauffangeinrichtung, insbesondere ein Schienensicherungssystem oder ein Seilsicherungssystem oder eine Anschlagpunktanordnung, ist, wobei die Absturzsicherung einen der Dachfläche zugewandten Sockelabschnitt aufweist, wobei insbesondere die Absturzsicherung einen der Dachfläche abgewandten Funktionsabschnitt aufweist, wobei das Dachsystem mehrere Modulstützen zum Stützen mindestens eines Photovoltaikmoduls aufweist, wobei die Modulstützen jeweils mit einer Unterseite auf der Dachfläche anordbar oder angeordnet sind und die Modulstützen jeweils an einer Oberseite eine Auflagefläche zum Auflegen eines Photovoltaikmoduls aufweisen, wobei das Dachsystem mindestens eine, insbesondere stabförmige, Kopplungstraverse zum Koppeln der Absturzsicherung mit einer Modulstütze aufweist, wobei die mindestens eine Kopplungstraverse in einem ersten Abschnitt mit einer Modulstütze verbindbar oder verbunden ist und wobei die mindestens eine Kopplungstraverse in einem zweiten Abschnitt mit dem Sockelabschnitt der Absturzsicherung verbindbar oder verbunden ist, wobei die Modulstützen jeweils mindestens eine Einschuböffnung zum Einschieben einer Kopplungstraverse aufweisen, wobei die mindestens eine Kopplungstraverse in dem ersten Abschnitt form- und/ oder funktionskomplementär in die mindestens eine Einschuböffnung eingeschoben oder einschiebbar ist, wobei insbesondere die Einschuböffnung mindestens einer Modulstütze ein, vorzugweise eine rechteckige oder eine Torbogen-förmige Grundform aufweisendes, Innenprofil aufweist.

Der Grundgedanke der Erfindung besteht darin, dass eine Absturzsicherung, insbesondere ein Absturzsicherungsgestell, gemeinsam mit mindestens einem Photovoltaikmodul auf einer Dachfläche angeordnet und befestigt wird. Das Dachsystem ist für mindestens ein Photovoltaikmodul vorgesehen, wobei das Dachsystem eine Absturzsicherung aufweist. Durch eine Verbindung von Absturzsicherung und Photovoltaikmodul wird eine gegenseitige Ballastierung und eine stabile Anordnung auf der Dachfläche erreicht. Die Nutzung des erfindungsgemäßen Dachsystems bewirkt eine geringe Gewichtsbelastung der Dachfläche, denn das Gewicht der Photovoltaikmodule wird zur Befestigung der Absturzsicherung genutzt.

Ein weiterer Vorteil der Erfindung ist, dass die Nutzung eines erfindungsgemäßen Dachsystems ressourcenschonend ist, indem keine zusätzlichen Gewichte zur Ballastierung nötig sind.

Ein Photovoltaikmodul ist eine Komponente einer Photovoltaikanlage, wobei üblicherweise ein Photovoltaikmodul aus mehreren flächig angeordneten Solarzellen besteht. Eine erfindungsgemäße Absturzsicherung, insbesondere ein erfindungsgemäßes Absturzsicherungsgestell, ist insbesondere eine Umwehrung, also eine Vorrichtung, welche dazu dient, einen Absturz von Personen auf tieferliegende Flächen zu verhindern. Ein Absturzsicherungsgestell ist insbesondere ein Geländer oder ein Gitter oder ein Seitenschutz. Eine erfindungsgemäße Absturzsicherung ist ebenfalls eine Individualabsturzauffangeinrichtung, wobei eine Individualabsturzauffangeinrichtung eine einzelne Person im Falle eines Sturzes auffängt. Hierzu wird üblicherweise eine Individualabsturzauffangeinrichtung, beispielsweise ein Schienensicherungssystem oder ein Seilsicherungssystem oder eine Anordnung mehrerer Anschlagpunkte, mit der persönlichen Schutzausrüstung der abstürzenden Person kombiniert. Insbesondere ist eine erfindungsgemäße Absturzsicherung ein Kollektivschutzsystem und/oder ein Individualschutzsystem.

Die Absturzsicherung weist einen der Dachfläche zugewandten Sockelabschnitt auf, wobei der Sockelabschnitt vorzugsweise der Abschnitt der Absturzsicherung ist, der an der Dachfläche angeordnet ist. Vorzugsweise weist die Absturzsicherung einen der Dachfläche abgewandten Funktionsabschnitt auf, wobei der Funktionsabschnitt hauptsächlich zur Sicherung vor Abstürzen, also zur Absicherung von Personen, vorgesehen ist.

Das Dachsystem weist mehrere Modulstützen zum Stützen mindestens eines Photovoltaikmoduls auf, wobei die Modulstützen jeweils eine Unterseite und eine Oberseite aufweisen. Dabei ist die Unterseite der Modulstütze insbesondere der untere, der Dachfläche zugewandte Abschnitt der Modulstütze. Die Oberseite der Modulstütze ist insbesondere der obere, der Dachfläche abgewandte Abschnitt der Modulstütze. Die Modulstützen weisen jeweils an einer Oberseite eine Auflagefläche zum Auflegen eines Photovoltaikmoduls auf. Auf eine Auflagefläche sind ebenfalls mehrere Photovoltaikmodule auflegbar. Ebenso ist es erfindungsgemäß, ein Photovoltaikmodul auf mehrere Auflageflächen aufzulegen. In bevorzugten Ausführungsformen weist die Oberseite einer Modulstütze, zusätzlich zu einer Auflagefläche, weitere Merkmale auf, welche weiter von der Dachfläche entfernt sind, beispielsweise eine Modulbefestigungsvorrichtung. In weiteren Ausführungsformen weisen die Auflageflächen zusätzliche Merkmale, insbesondere eine Auflageflächenbohrung, auf.

Das Dachsystem weist mindestens eine, insbesondere stabförmige, Kopplungstraverse zum Koppeln der Absturzsicherung mit einer Modulstütze auf. Mittels einer solchen Kopplung wird das auf einer Modulstütze aufliegende Gewicht als Ballastierung mit der Absturzsicherung verbunden. Die Kopplungstraverse oder Kopplungstraversen sind in einer Ausgestaltung Bestandteil der Absturzsicherung. Stabförmig ist insbesondere eine Kopplungstraverse, deren Länge größer als ihr Querschnitt, insbesondere mindestens doppelt so lang wie ihr Querschnitt, insbesondere mindestens dreimal so lang wie ihr Querschnitt, ist. In Ausführungsformen weist die Kopplungstraverse einen runden Querschnitt oder einen rechteckigen Querschnitt oder einen andersförmigen Querschnitt auf. Bevorzugterweise ist die Form einer Kopplungstraverse angepasst an die Verbindung zur Modulstütze und zur Verbindung an die Absturzsicherung. Mittels mindestens einer Kopplungstraverse sind eine Modulstütze und die Absturzsicherung beabstandet. Bevorzugterweise beträgt diese Beabstandung mindestens 50 cm, mindestens 60 cm oder eine andere Länge. Durch die Beabstandung von Modulstütze und Absturzsicherung wird ein Wartungsweg für Personen ausgebildet. Die mindestens eine Kopplungstraverse ist in bevorzugten Ausführungsformen entlang ihrer Längserstreckung parallel zur Dachfläche verlaufend ausgebildet.

Vorzugsweise zeichnet sich das Dachsystem dadurch aus, dass die Modulstützen aus Metall, insbesondere Stahl und/oder Aluminium, und/oder Kunststoff hergestellt sind und/oder dass die Absturzsicherung aus Metall, insbesondere Stahl und/oder Aluminium, und/oder Kunststoff hergestellt ist und/oder dass die mindestens eine Kopplungstraverse aus Metall, insbesondere Stahl und/oder Aluminium, und/oder Kunststoff hergestellt ist. In bevorzugten Ausführungsformen sind Bestandteile des Dachsystems aus anderen Werkstoffen hergestellt.

Vorzugsweise zeichnet sich das Dachsystem dadurch aus, dass die Absturzsicherung mindestens eine Befestigungsvorrichtung, insbesondere einen Klappmechanismus, zur Befestigung einer Kopplungstraverse an der Absturzsicherung aufweist, wobei insbesondere die Befestigungsvorrichtung im Sockelabschnitt der Absturzsicherung angeordnet ist und/oder wobei insbesondere die Kopplungstraverse in dem zweiten Abschnitt mittels der Befestigungsvorrichtung mit dem Sockelabschnitt der Absturzsicherung verbindbar oder verbunden ist. In bevorzugten Ausführungsformen ist mindestens eine Kopplungstraverse mittels eines Klappmechanismus an der Absturzsicherung befestigt. Dies ist vorteilhaft für einen einfachen Transport und schnellen Aufbau des Dachsystems. Eine Anordnung der Befestigungsvorrichtung im Sockelabschnitt der Absturzsicherung ermöglicht eine Anordnung der Kopplungstraverse nahe der Dachfläche und damit einen komfortablen Wartungsweg.

Ferner zeichnet sich bevorzugterweise das Dachsystem dadurch aus, dass die Modulstützen jeweils mindestens zwei Einschuböffnungen zum Einschieben einer Kopplungstraverse aufweisen, wobei insbesondere die Einschuböffnungen mindestens einer Modulstütze ein, vorzugweise eine rechteckige oder eine Torbogen-förmige Grundform aufweisendes, Innenprofil aufweisen und/oder wobei insbesondere die mindestens eine Kopplungstraverse in dem ersten Abschnitt form- und/oder funktionskomplementär in die mindestens eine Einschuböffnung eingeschoben oder einschiebbar ist. Durch die vorgesehene mechanische Passung wird eine Modulstütze stabil mit einer Kopplungstraverse ohne weitere Befestigung, d.h. befestigungsmittelfrei und/oder klemmmittelfrei, verbunden. Ist eine Kopplungstraverse passig in eine Einschuböffnung eingeschoben, so wird die Kopplungstraverse in mindestens zwei Richtungen unbeweglich. Eine Verkantung der Kopplungstraverse bewirkt eine stabile Verbindung der Modulstütze mit der Kopplungstraverse. In weiteren Ausführungsformen sind zusätzliche Aussparungen oder Vereinfachungen der Form an der Kopplungstraverse und/oder der Einschuböffnung vorgenommen. In bevorzugten Ausführungsformen weist eine Einschuböffnung ein Gewinde oder eine andere Befestigungsvorrichtung auf. Dies bewirkt zusätzliche Stabilität. Die Modulstützen weisen jeweils mindestens eine Einschuböffnung auf, insbesondere jeweils mindestens zwei Einschuböffnungen. Mehrere Einschuböffnungen ermöglichen es, mit einer Modulstütze mehrere Kopplungstraversen zu verbinden. In unterschiedlichen Ausführungsformen sind die Einschuböffnungen nebeneinander und/oder übereinander angeordnet. In weiteren Ausführungsformen sind die mindestens zwei Einschuböffnungen unterschiedlicher Größe und/oder weisen unterschiedliche Formen auf. Bevorzugterweise ist eine Modulstütze symmetrisch zu einer Spiegelachse, die senkrecht zur Dachfläche verläuft, ausgebildet, so dass formidentische Einschuböffnungen nebeneinander angeordnet sind. Dies ermöglicht beispielsweise eine einfachere Herstellung der Modulstützen.

Ferner zeichnet sich das Dachsystem dadurch aus, dass mindestens eine Modulstütze, insbesondere an der Unterseite der Modulstütze, eine Dachbefestigungseinrichtung zur Befestigung der Modulstütze an der Dachfläche, insbesondere eine Bohrung, aufweist. Eine Dachbefestigung mittels der Dachbefestigungseinrichtung bewirkt eine stabile Befestigung der Modulstütze an der Dachfläche. Dies ermöglicht ebenfalls eine ortsfeste Positionierung der Modulstütze, wenn keine Photovoltaikmodule auf die Modulstütze aufgelegt sind. Eine Dachbefestigungseinrichtung ist beispielsweise eine Bohrung für eine Schraube oder ein Ausleger bzw. ein Flügel, welcher mittels Bitumen verschweißt oder vergossen ist. In weiteren Ausführungsformen sind die Dachbefestigungseinrichtung eine Rastvorrichtung, ein Klemmverschluss und/oder ein Haken.

Bevorzugterweise zeichnet sich ein Dachsystem dadurch aus, dass die Auflageflächen zum Auflegen eines Photovoltaikmoduls an der Oberseite der Modulstützen zur Dachfläche einen Winkel von mehr als 0 Grad und weniger als 30 Grad, insbesondere mehr als 5 Grad und weniger als 15 Grad, aufweisen. Auflageflächen mit einem entsprechenden Winkel gegenüber der Dachfläche ermöglichen ein stabiles Auflegen der Photovoltaikmodule auf das Dachsystem und damit eine zuverlässige Ballastierung der Absturzsicherung. In Ausführungsformen ist der Winkel der Auflageflächen gegenüber der Dachfläche angepasst an den Standort der Dachfläche und den entsprechenden Sonnenstand.

Bevorzugterweise weisen die Modulstützen eines Dachsystems an der Oberseite mehrere Auflageflächen auf, wobei jede Auflagefläche zum Auflegen mindestens eines Photovoltaikmoduls vorgesehen ist. Auf diese Weise sind mehrere Photovoltaikmodule mit wenigen Modulstützen auf einer Dachfläche anordbar. In einer Ausführungsform weisen mindestens zwei Auflageflächen einen identischen Winkel gegenüber der Dachfläche auf und in einer Ausführungsform weisen zwei Auflageflächen entgegengesetzte Winkel gegenüber der Dachfläche auf. In einer bevorzugten Ausführungsform ist eine Modulstütze symmetrisch zu einer Spiegelfläche, die senkrecht zur Dachfläche verläuft, wobei insbesondere die Spiegelfläche senkrecht zu einer Einschuböffnung der Modulstütze verläuft, ausgebildet.

Vorzugsweise weist mindestens eine Modulstütze eine Modulbefestigungsvorrichtung zur Befestigung eines Photovoltaikmoduls auf, wobei mindestens eine Modulstütze eine Modulbefestigungsvorrichtung zur Befestigung eines Photovoltaikmoduls aufweist, wobei insbesondere die Modulbefestigungsvorrichtung als Klemmvorrichtung zum Festklemmen eines auf die Modulstütze aufgelegten Photovoltaikmoduls ausgebildet ist, wobei insbesondere die Klemmvorrichtung eine Klemmschiene mit einem form- und/oder funktionskomplementären Klemmsteg aufweist. In einer weiteren Ausführungsform ist die Modulbefestigungsvorrichtung als Bohrung für eine Schraube oder als eine Rastvorrichtung oder als eine Nutschraube oder als Nutensteinschraubsysteme oder dergleichen ausgebildet. In einer anderen Ausführungsform ist die Modulbefestigungsvorrichtung eine metallische Kontaktfläche, welche mit dem Photovoltaikmodul bzw. dem Gehäuse des Photovoltaikmoduls verschweißt wird. Erfindungsgemäß sind die Modulstützen derart ausgebildet, dass die Photovoltaikmodule ohne weitere Befestigung stabil auf den Modulstützen und damit dem Dachsystem aufliegen. Eine Modulbefestigungsvorrichtung bewirkt eine zusätzliche, lösbare oder unlösbare Verbindung. Insbesondere ist die Modulbefestigungsvorrichtung als Klemmvorrichtung zum Festklemmen eines auf die Modulstütze aufgelegten Photovoltaikmoduls ausgebildet. Dies ermöglicht eine schnelle und einfache Montage und zusätzliche Befestigung.

Vorzugsweise zeichnet sich das Dachsystem dadurch aus, dass das Dachsystem mindestens zwei eine unterschiedliche Form aufweisende Modulstützen umfasst, wobei insbesondere mindestens eine Modulstütze als Eckmodulstütze mit zwei senkrecht zueinander angeordneten Einschuböffnungen ausgebildet ist und/oder wobei insbesondere mindestens eine erste Modulstütze eine andere Höhe aufweist als eine zweite Modulstütze. In eine Eckmodulstütze mit zwei senkrecht zueinander angeordneten Einschuböffnungen eingesteckte Kopplungstraversen stehen senkrecht zueinander. Entsprechend sind diese Kopplungstraversen geeignet, mit einer eine Ecke aufweisenden Absturzsicherung verbunden zu werden. Dies ist beispielsweise bei der Ecke einer Dachfläche mit einem umlaufenden Geländer der Fall. Ein Dachsystem mit Modulstützen, welche mindestens zwei unterschiedliche Formen aufweisen, ist vielseitig für unterschiedliche Dachflächen und unterschiedliche Absturzsicherungen einsetzbar. Wird ein Photovoltaikmodul aufgelegt auf mindestens zwei Modulstützen eines Dachsystems, wobei die Modulstützen eine unterschiedliche Höhe aufweisen, ist in dieser Ausführungsform das Photovoltaikmodul gegenüber der Dachfläche verkippt.

Insbesondere ist für das Dachsystem weiterhin vorgesehen, dass das Dachsystem mindestens zwei, insbesondere stabförmige, Kopplungstraversen aufweist, wobei die mindestens zwei Kopplungstraversen jeweils mit einer Modulstütze verbindbar oder verbunden sind und mit dem Sockelabschnitt der Absturzsicherung verbindbar oder verbunden sind, wobei insbesondere die mindestens zwei Kopplungstraversen parallel oder senkrecht zueinander angeordnet sind, wobei insbesondere eine Kopplungstraverse mit zwei Modulstützen verbindbar oder verbunden ist. Dies erlaubt eine flexible Anordnung von Modulstützen und Absturzsicherung. Mittels mehrerer Kopplungstraversen eines Dachsystems ist eine ausgedehnte Absturzsicherung, insbesondere ein ausgedehntes Absturzsicherungsgestell, stabil an mehrere Modulstützen koppelbar oder gekoppelt. **In** einer Ausführungsform, wobei die mindestens zwei Kopplungstraversen senkrecht zueinander angeordnet sind, weist die Absturzsicherung, beispielsweise ein Geländer, einen rechten Winkel, beispielsweise an einer Gebäude- bzw. Dachflächenecke, auf. Die Verbindung von mehreren Kopplungstraversen mit jeweils einer Modulstütze bewirkt ein stabiles, ausgedehntes, an die jeweilige Dachfläche und an die jeweilige Photovoltaikanlage angepasstes Dachsystem.

Vorzugsweise zeichnet sich das Dachsystem dadurch aus, dass die Absturzsicherung, insbesondere Absturzsicherungsgestell, mehrere Absturzsicherungsgestellsegmente umfasst, wobei mindestens ein Absturzsicherungsgestellsegment bewegbar, insbesondere klappbar und/oder in der Dachfläche versenkbar, ausgebildet ist, wobei insbesondere das mindestens eine bewegbare Absturzsicherungsgestellsegment mittels einer, insbesondere elektrischen oder elektronischen, Steuereinheit bewegbar ist, wobei insbesondere die Steuereinheit eine Aktuatorikeinheit zum Bewegen des mindestens einen bewegbaren Absturzsicherungsgestellsegments aufweist. Insbesondere sind in einer Ausführungsform mindestens ein oder mehrere Absturzsicherungsgestellsegmente mechanisch bewegbar.

In einer Ausführungsform ist das Absturzsicherungsgestell ein Geländer, welches während Arbeiten auf der Dachfläche auf eine volle Gesamthöhe ausgeklappt ist. In wartungsfreien Zeiten ist die Absturzsicherung nicht notwendig und das Geländer oder der obere Teil des Geländers wird eingeklappt. Beispielsweise ist ein Geländer auf die halbe Höhe der Gesamthöhe einklappbar, so dass das Geländer weniger oder keinen Schattenwurf auf das Photovoltaikmodul oder die Photovoltaikmodule bewirkt. In einer anderen Ausführung ist der Handlauf eines Geländers nach unten, d.h. in Richtung der Dachfläche, bewegbar, beispielsweise mittels eines Teleskopstangenmechanismus. In einer anderen Ausführungsform ist ein Geländer in seiner Breite veränderbar, beispielsweise klappbar, so dass Schattenwurf nur durch den nicht eingeklappten zentralen Teil des Geländers bewirkt wird. In einer weiteren Ausführungsform sind Absturzsicherungsgestellsegmente bewegbar ausgebildet, so dass zu dekorativen Zwecken das Absturzsicherungsgestell weniger oder nicht sichtbar ist. Die Steuereinheit steuert die bewegbaren Absturzsicherungsgestellsegmente und ist insbesondere elektrisch oder elektronisch. In einer weiteren Ausführungsform ist die Steuereinheit mechanisch. In Ausführungsformen ist die Steuereinheit durch eine Person manuell bedienbar und/oder automatisch in Betrieb. Die Bedienung durch eine Person erfolgt beispielsweise mittels Knopfdruck oder anderer Nutzereingabe, wobei eine Nutzereingabe in der Nähe der Dachfläche und/oder auf der Dachfläche und/oder von einem anderen Ort möglich ist. In weiteren Ausführungsformen sind Absturzsicherungsgestellsegmente mittels einer Steuereinheit bewegbar, wobei die Steuereinheit auf Grundlage von Betriebsparametern des Dachsystems oder eines Photovoltaikmoduls und/oder metrologischer Parameter die Absturzsicherung steuert. Beispielsweise sind die Absturzsicherungsgestellsegmente mittels der Steuereinheit bewegbar in Abhängigkeit vom Sonnenstand und/oder der Bewölkung und/oder des Datums und/oder der Tageszeit.

In bevorzugten Ausführungsformen zeichnet sich das Dachsystem dadurch aus, dass das Dachsystem mindestens eine, insbesondere mechanische oder elektrische oder elektronische, Dachpositionierungsüberwachungseinrichtung zum Überwachen der Positionierung des Dachsystems auf der Dachfläche aufweist. Die Überwachung der Positionierung des Dachsystems auf der Dachfläche ermöglicht den sicheren Betrieb des Dachsystems, indem bei regelmäßiger Überprüfung vor einem Schadensfall Instabilitäten identifiziert und behoben werden. In einer elektronischen Ausführungsform weist die Dachpositionierungsüberwachungseinrichtung ein oder mehrere Sensoren auf, welche die Position des Dachsystems und/oder Festigkeit der Verbindung von Dachsystem und Dachfläche messen. In einer mechanischen Ausführungsform ist die Dachpositionierungsüberwachungseinrichtung ein oder mehrere Metallstreifen, die zwischen Dachfläche und Dachsystem angeordnet sind und bei fester Verbindung von Dachfläche und Dachsystem ebenfalls fest positioniert sind und bei loser Verbindung von Dachfläche und Dachsystem entfernbar sind. In einer weiteren Ausführungsform zeigt die Dachpositionierungsüberwachungseinrichtung die Güte der Positionierung bzw. Stabilität der Verbindung über ein Farbsignal.

Ferner zeichnet sich das Dachsystem dadurch aus, dass das Dachsystem eine mindestens einen Systemkontrollsensor aufweisende Systemkontrolleinheit zum Messen und/oder Verarbeiten und/oder Übertragen von Systemkontrollsensordaten aufweist, wobei insbesondere mittels des mindestens einen Systemkontrollsensors Betriebsparameter des Dachsystems und/oder eines Photovoltaikmoduls und/oder meteorologische Parameter messbar sind, wobei insbesondere die Systemkontrollsensordaten von der Systemkontrolleinheit an die Steuereinheit und/oder die Aktuatorikeinheit übermittelbar sind. Betriebsparameter des Dachsystems sind beispielsweise die aufliegende Last, geometrische Parameter des Dachsystems und der Anordnung auf einer Dachfläche und/oder Angaben über die Absturzsicherung und ihre Nutzung. Betriebsparameter eines Photovoltaikmoduls sind beispielsweise Betriebsparameter der zugehörigen Photovoltaikanlage, beispielsweise elektrische Parameter, insbesondere Momentanwerte, beispielsweise die Ertragsleistung eines Photovoltaikmoduls. Durch die Messung von Betriebsparametern sind Fehlfunktionen frühzeitig feststellbar. Meteorologische Parameter sind beispielsweise Lufttemperatur, Luftfeuchte, Luftdruck, Windrichtung und Windgeschwindigkeit, Bewölkung, Niederschlag, Dauer und Intensität der Sonneneinstrahlung, Sonnenscheindauer, Sonnenhöhe und/oder Energiewerte der Strahlung. In Ausführungsformen sind die Systemkontrollsensordaten von der Systemkontrolleinheit an die Steuereinheit und/oder die Aktuatorikeinheit, mittels derer mindestens ein Absturzsicherungsgestellsegment bewegbar ist, übermittelbar. Unter Berücksichtigung der Systemkontrollsensordaten steuert die Steuereinheit die Bewegung der Absturzsicherungsgestellsegmente. In anderen Ausführungsformen ist die Steuereinheit unabhängig von der Systemkontrolleinheit und dem mindestens einen Systemkontrollsensor.

Vorzugsweise ist das Dachsystem dadurch gekennzeichnet, dass es ein Photovoltaikmodul oder mehrere Photovoltaikmodule umfasst, wobei das Photovoltaikmodul oder die mehreren Photovoltaikmodule auf den Modulstützen auflegbar oder aufgelegt ist oder sind, wobei insbesondere mehrere, insbesondere benachbarte, Photovoltaikmodule eine ebene Fläche bildend auf den Modulstützen auflegbar oder aufgelegt sind. Das mindestens eine auf die Modulstützen aufgelegte Photovoltaikmodul liegt mit seiner Masse bzw. seinem Gewicht auf und stabilisiert damit die Absturzsicherung. Das Photovoltaikmodul oder die Photovoltaikmodule dienen als Ballastierung für das Dachsystem einschließlich der Absturzsicherung, insbesondere des Absturzsicherungsgestells. Bevorzugterweise weisen die eine ebene Fläche bildenden Photovoltaikmodule einen gleichen Winkel gegenüber der Dachfläche auf. Die Anordnung mehrerer Photovoltaikmodule auf mehrere Modulstützen ermöglicht das Aufstellen einer größeren Solaranlage bei gleichzeitiger Befestigung der Absturzsicherung. Zusätzliche aufgelegte Photovoltaikmodule erhöhen die Ballastierung des Dachsystems und der Absturzsicherung. In einer bevorzugten Ausführungsform weist das Dachsystem eine Absturzsicherung, insbesondere ein Geländer, auf, wobei die Absturzsicherung, insbesondere zusammenhängend, an mehreren Absturzkanten der Dachfläche, insbesondere Gebäudeecken umschließend, angeordnet ist.

In einer Ausführungsform umfasst das Dachsystem mindestens eine erste Gruppe von Photovoltaikmodulen und eine zweite Gruppe von Photovoltaikmodulen, wobei die erste Gruppe von Photovoltaikmodulen eine ebene Flächen bildend einen ersten Winkel gegenüber der Dachfläche aufweist, und wobei die zweite Gruppe von Photovoltaikmodulen spiegelsymmetrisch zur ersten Gruppe von Photovoltaikmodulen anordbar oder angeordnet ist, wobei die Spiegelebene senkrecht zur Dachfläche verlaufend angeordnet ist, wobei insbesondere die Spiegelebene entlang einer zur Dachfläche parallel verlaufenen Kante der ersten Gruppe von Photovoltaikmodulen verlaufend angeordnet ist.

Ferner wird die Aufgabe gelöst durch eine Verwendung eines voranstehend beschriebenen Dachsystems zur Anordnung von einer Absturzsicherung, insbesondere einem Absturzsicherungsgestell, wobei insbesondere die Absturzsicherung eine Umwehrung, insbesondere ein Geländer oder ein Gitter oder ein Seitenschutz, und/oder eine Individualabsturzauffangeinrichtung, insbesondere ein Schienensicherungssystem oder ein Seilsicherungssystem oder eine Anschlagpunktanordnung, ist, und einem Photovoltaikmodul oder mehreren Photovoltaikmodulen auf einer Dachfläche, insbesondere einem Flachdach. Zur Vermeidung von Wiederholungen wird auf die obige Beschreibung des Dachsystems ausdrücklich verwiesen. Weitere Merkmale der Erfindung werden aus der Beschreibung erfindungsgemäßer Ausführungsformen zusammen mit den Ansprüchen und den beigefügten Zeichnungen ersichtlich.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische, perspektivische Ansicht eines Dachsystems mit aufgelegten Photovoltaikmodulen,
- Fig. 2: eine Ausschnittsdarstellung der schematischen, perspektivischen Ansicht des Dachsystems aus Fig. 1,
- Fig. 3: eine schematische Draufsicht des Dachsystems mit aufgelegten Photovoltaikmodulen aus Fig. 1,
- Fig. 4: eine schematische Seitenansicht des Dachsystems mit aufgelegten Photovoltaikmodulen aus Fig. 1.
- Fig. 5: eine schematische, perspektivische Ansicht der Modulstütze aus Fig. 1,
- Fig. 6: eine schematische Draufsicht der Modulstütze aus Fig. 5 und
- Fig. 7: eine schematische Querschnittsdarstellung einer weiteren Modulstütze.

In den Zeichnungen sind jeweils gleiche oder gleichartige Elemente und/oder Teile mit denselben Bezugsziffern versehen, so dass von einer erneuten Vorstellung jeweils abgesehen wird.

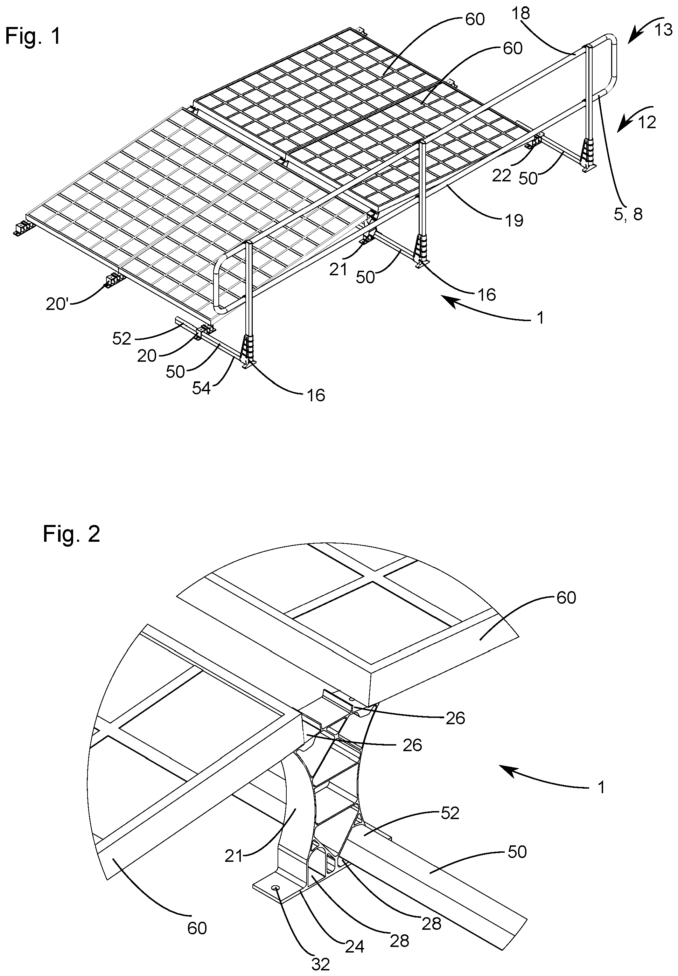

Fig. 1 zeigt eine schematische, perspektivische Darstellung eines Dachsystems 1 auf einer nicht dargestellten Dachfläche 3 mit einer Absturzsicherung 5, welche als Geländer 8 ausgebildet ist, und mit Kopplungstraversen 50 sowie Modulstützen 20, 20', 21, 22. Die Modulstützen 20, 20' und 22 sind gleich bzw. gleichartig ausgebildet. Auf die Modulstützen 20, 20', 21, 22 sind Photovoltaikmodule 60 aufgelegt. In die Modulstützen 20, 21, 22 ist jeweils eine Kopplungstraverse 50 eingeschoben. Der erste Abschnitt 52 der Kopplungstraversen 50 ist durch die Einschuböffnungen 28 der Modulstützen 20, 21, 22 hindurchgeschoben. Jede Kopplungstraverse 50 ist in einem zweiten Abschnitt 54 mittels einer Befestigungsvorrichtung 16, wobei in diesem Ausführungsbeispiel die Befestigungsvorrichtung 16 ein Klappmechanismus ist, mit dem Sockelabschnitt 12 der Absturzsicherung 5 verbunden. Der Funktionsabschnitt 13 der Absturzsicherung 5, die in diesem Ausführungsbeispiel ein Geländer 8 ist, umfasst insbesondere einen Handlauf 18 und eine Knieleiste 19. Jeweils zwei benachbarte Photovoltaikmodule 60 bilden eine ebene Fläche. Die beiden ebenen Flächen, welche beide aus jeweils zwei Photovoltaikmodulen 60 bestehen, sind gegenüber verkippt.

Aus diesem Ausführungsbeispiel sind mit geringfügigen Ergänzungen weitere erfindungsgemäße Ausführungsbeispiele abzuleiten: Ausführungsbeispiele mit einem verlängerten Geländer 8 oder einem Geländer 8, welches zusätzlich entlang einer zweiten Kante der Photovoltaikmodule 60 mittels Kopplungstraversen 50 mit den Modulstützen 20, 20' verbunden ist (in Fig. 1 links vorn), und/oder Ausführungsbeispiele mit weiteren Modulstützen 20, 21, 22 und/oder weiteren aufgelegten oder auflegbaren Photovoltaikmodulen 60.

Fig. 2 zeigt einen Ausschnitt der schematischen, perspektivischen Darstellung des Dachsystems 1 aus Fig. 1 mit zwei auf die Modulstütze 21 aufgelegten Photovoltaikmodulen 60. **In** die Modulstütze 21 ist eine Kopplungstraverse 50 für eine Absturzsicherung 5 mit einem ersten Abschnitt 52 der Kopplungstraverse 50 eingeschoben. Der erste Abschnitt 52 der Kopplungstraverse 50 ist durch die Modulstütze 21 hindurchgeschoben. Der zweite Abschnitt 54 der Kopplungstraverse 50 zur Verbindung mit der Absturzsicherung 5 ist nicht dargestellt. Die Modulstütze 21 weist nahe der Unterseite 24 zwei Einschuböffnungen 28 sowie an der Oberseite zwei Auflageflächen 26 auf. Auf diese Auflageflächen 26 sind zwei Photovoltaikmodule 60 aufgelegt. Die Modulstütze 21 weist in diesem Ausführungsbeispiel an der Unterseite 24 als Dachbefestigungseinrichtung 32 eine Bohrung auf.

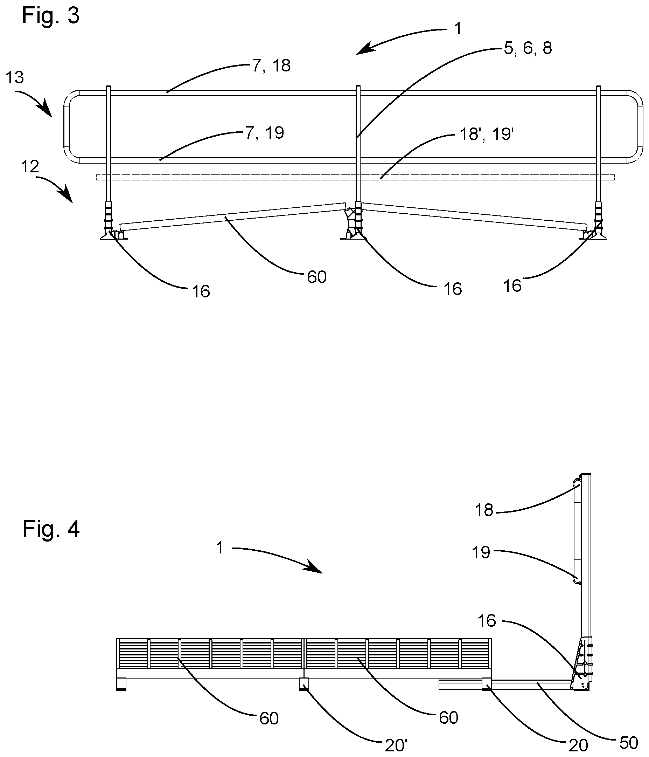

Fig. 3 zeigt eine schematische Draufsicht des Dachsystems 1 aus Fig. 1. Die Absturzsicherung 5 ist ein Absturzsicherungsgestell 6 und ein Geländer 8, welches mehrere Absturzsicherungsgestellsegmente 7 aufweist. Ein Absturzsicherungsgestellsegment 7 ist ein Handlauf 18 und ein anderes Absturzsicherungsgestellsegment 7 ist eine Knieleiste 19. Diese sind Teile des Funktionsabschnitts 13. Weiterhin besteht die Absturzsicherung 5 aus dem Sockelabschnitt 12, der drei Befestigungsvorrichtungen 16 zur Befestigung der Kopplungstraversen 50 aufweist. In diesem Ausführungsbeispiel sind Handlauf 18 und Knieleiste 19 bewegbar ausgebildet. In einem zweiten Zustand, der gestrichelt dargestellt ist, sind Handlauf 18' und Knieleiste 19' nach hinten geklappt. Auf diese Weise wird die Höhe der Absturzsicherung 5 reduziert und ebenfalls die Abschattung der Photovoltaikmodule 60 reduziert. Die Steuereinheit, mittels derer das mindestens eine bewegbare Absturzsicherungsgestellsegment 7 bewegbar ist, ist in Fig. 3 nicht dargestellt.

Fig. 4 zeigt eine schematische Seitenansicht des Dachsystems 1 aus Fig. 1 und Fig. 3. Die Abbildung zeigt die gleichen Merkmale wie das Dachsystem 1 in Fig. 1 und Fig. 3. In einer anderen, nicht dargestellten Ausführungsform ist eine Kopplungstraverse 50, welche eine größere Länge als die im Ausführungsbeispiel aufweist, in die Einschuböffnung der Modulstütze 20 und die Einschuböffnung der Modulstütze 20' eingeschoben. Das Einschieben einer Kopplungstraverse 50 in mehrere Einschuböffnungen 28 mehrerer Modulstützen 20, 20' bewirkt eine stabilere Befestigung an der Absturzsicherung 5.

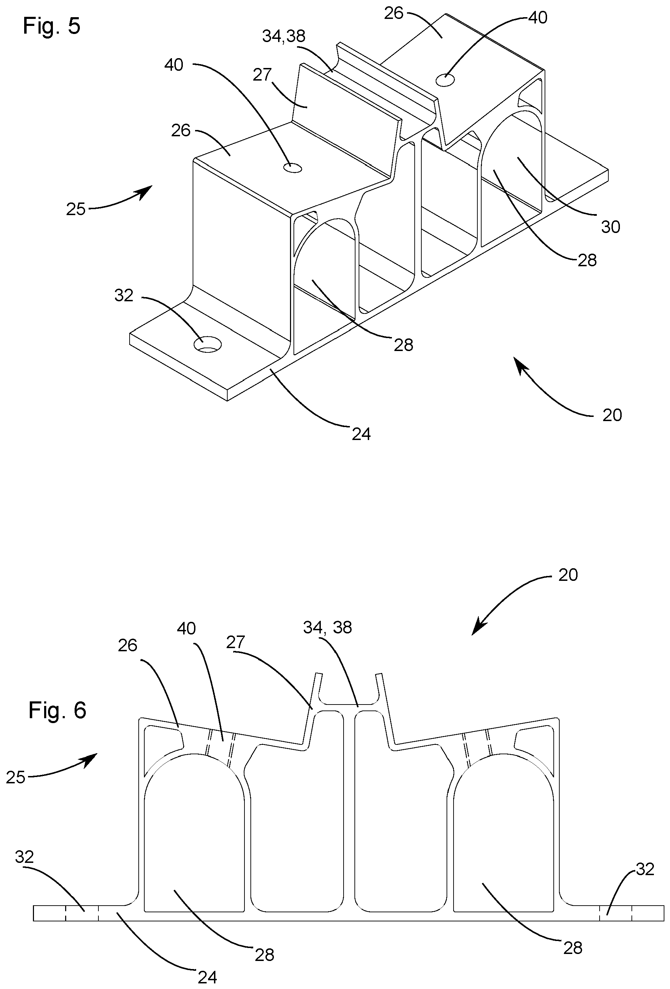

Fig. 5 zeigt eine schematische, perspektivische Darstellung der Modulstütze 20 aus Fig. 1. Die gleiche Modulstütze 20 ist in einer schematischen Draufsicht in Fig. 2 dargestellt, wobei hinter der Oberfläche liegende Merkmale gestrichelt dargestellt sind. Die Modulstütze 20 weist eine Unterseite 24 auf. In diesem Ausführungsbeispiel weist die Modulstütze als Dachbefestigungseinrichtung 32 zwei Bohrungen auf. An der Oberseite 25 der Modulstütze 20 sind zwei Auflageflächen 26 angeordnet. Die Auflageflächen 26 weisen gegenüber der Dachfläche, welche nicht dargestellt ist und parallel zur Unterseite der Modulstütze 24 angeordnet ist, einen Winkel von zwischen 0° und 30° auf. In diesem Ausführungsbeispiel weisen die Auflageflächen eine zusätzliche Bohrung, eine Auflageflächenbohrung 40, auf. Weiterhin ist an den Auflageflächen 26 am zur Mitte zugewandten Ende der Auflageflächen 26 jeweils eine Halterückwand 27 angeordnet. Die Halterückwand 27 hält ein aufgelegtes Photovoltaikmodul und verbessert damit die Stützeigenschaften der Modulstütze 20. Die Modulstütze 20 weist eine Modulbefestigungsvorrichtung 34 auf, die in diesem Ausführungsbeispiel als Klemmschiene 38 ausgebildet ist. Der Klemmstab der Klemmvorrichtung 36 ist nicht abgebildet. Zwischen Unterseite 24 und Oberseite 25 der Modulstütze 20 sind in dieser Modulstütze 20 mehrere Einschuböffnungen 28 dargestellt. Die äußeren Einschuböffnungen 28 sind in einer Torbogen-förmigen Grundform ausgebildet. In die Einschuböffnungen 28 sind die Kopplungstraversen 50 einschiebbar. Das Innenprofil 30 der Einschuböffnungen 28 weist in diesem Ausführungsbeispiel keine zusätzliche Struktur auf. In anderen Ausführungsformen, die nicht dargestellt sind, weist eine Einschuböffnung 28 beispielsweise ein Gewinde als Innenprofil 30 auf. Die in Fig. 5 und Fig. 6 dargestellte Modulstütze 20 ist symmetrisch gegenüber einer zentralen Spiegelebene.

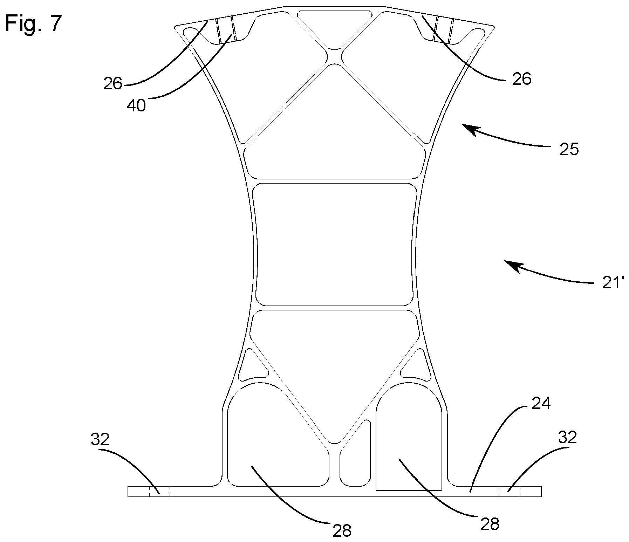

In Fig. 7 ist eine weitere Ausführungsform einer Modulstütze 21' in einer schematischen Draufsicht dargestellt, wobei hinter der Oberfläche liegende Merkmale gestrichelt dargestellt sind. Die dargestellte Modulstütze 21' weist ähnliche Merkmale wie die Modulstütze 21 aus Fig. 1 und Fig. 2 auf. Die Unterseite 24 der Modulstütze 21' weist zwei Dachbefestigungseinrichtungen 32, die in diesem Ausführungsbeispiel als Bohrungen ausgebildet sind, auf. An der Oberseite 25 der Modulstütze 21' sind zwei Auflageflächen 26 angeordnet. Die beiden Auflageflächen 26 weisen entgegengesetzte Winkel gegenüber der Dachfläche auf. Beide Auflageflächen 26 weisen jeweils eine Auflageflächenbohrung 40 auf. Die Modulstütze 21' weist nahe der Unterseite 24 mehrere Einschuböffnungen 28 mit unterschiedlichem Innenprofil 30 auf. In der Figur rechts dargestellt ist eine Einschuböffnung 28 mit Torbogen-förmiger Grundform. Die in Fig. 7 dargestellte Modulstütze ist geeignet, eine größere Höhe als die Modulstütze 20 aus Fig. 5 und 6 aufzuweisen.

### Bezugszeichenliste

- 1: Dachsystem
- 5: Absturzsicherung
- 6: Absturzsicherungsgestell
- 7: Absturzsicherungsgestellsegment
- 8: Geländer
- 12: Sockelabschnitt
- 13: Funktionsabschnitt
- 16: Befestigungsvorrichtung
- 18, 18': Handlauf
- 19, 19': Knieleiste
- 20, 20', 21, 21' 22: Modulstütze
- 24: Unterseite
- 25: Oberseite
- 26: Auflagefläche
- 27: Halterückwand
- 28: Einschuböffnung
- 30: Innenprofil
- 32: Dachbefestigungseinrichtung
- 34: Modulbefestigungsvorrichtung
- 36: Klemmvorrichtung
- 38: Klemmschiene
- 40: Auflageflächenbohrung
- 50: Kopplungstraverse
- 52: erster Abschnitt (einer Kopplungstraverse)
- 54: zweiter Abschnitt (einer Kopplungstraverse)
- 60: Photovoltaikmodul

## Patentansprüche

1. Dachsystem (1) für mindestens ein Photovoltaikmodul (60), wobei das Dachsystem (1) auf einer Dachfläche, insbesondere einem Flachdach, anordbar oder angeordnet ist, wobei das Dachsystem (1) eine Absturzsicherung (5), insbesondere ein Absturzsicherungsgestell (6), aufweist, wobei die Absturzsicherung (5) einen der Dachfläche zugewandten Sockelabschnitt (12) aufweist, wobei insbesondere die Absturzsicherung (5) einen der Dachfläche abgewandten Funktionsabschnitt (13) aufweist, wobei das Dachsystem (1) mehrere Modulstützen (20) zum Stützen mindestens eines Photovoltaikmoduls (60) aufweist, wobei die Modulstützen (20) jeweils mit einer Unterseite (24) auf der Dachfläche anordbar oder angeordnet sind und die Modulstützen (20) jeweils an einer Oberseite (25) eine Auflagefläche (26) zum Auflegen eines Photovoltaikmoduls (60) aufweisen, wobei das Dachsystem (1) mindestens eine, insbesondere stabförmige, Kopplungstraverse (50) zum Koppeln der Absturzsicherung (5) mit einer Modulstütze (20) aufweist, wobei die mindestens eine Kopplungstraverse (50) in einem ersten Abschnitt (52) mit einer Modulstütze (20) verbindbar oder verbunden ist und wobei die mindestens eine Kopplungstraverse (50) in einem zweiten Abschnitt (54) mit dem Sockelabschnitt (12) der Absturzsicherung (5) verbindbar oder verbunden ist, wobei die Modulstützen (20) jeweils mindestens eine Einschuböffnung (28) zum Einschieben einer Kopplungstraverse (50) aufweisen, wobei die mindestens eine Kopplungstraverse (50) in dem ersten Abschnitt (52) form- und/oder funktionskomplementär in die mindestens eine Einschuböffnung (28) eingeschoben oder einschiebbar ist, wobei insbesondere die Einschuböffnung (28) mindestens einer Modulstütze (20) ein, vorzugweise eine rechteckige oder eine Torbogen-förmige Grundform aufweisendes, Innenprofil (30) aufweist.

2. Dachsystem (1) nach Anspruch 1, **dadurch gekennzeichnet, dass** die Modulstützen (20) aus Metall, insbesondere Stahl und/oder Aluminium, und/oder Kunststoff hergestellt sind und/oder dass die Absturzsicherung (5) aus Metall, insbesondere Stahl und/oder Aluminium, und/oder Kunststoff hergestellt ist und/oder dass die mindestens eine Kopplungstraverse (50) aus Metall, insbesondere Stahl und/oder Aluminium, und/oder Kunststoff hergestellt ist.

3. Dachsystem (1) nach Anspruch 1 oder 2, **dadurch gekennzeichnet, dass** die Absturzsicherung (5) mindestens eine Befestigungsvorrichtung (16), insbesondere einen Klappmechanismus, zur Befestigung einer Kopplungstraverse (50) an der Absturzsicherung (5) aufweist, wobei insbesondere die Befestigungsvorrichtung (16) im Sockelabschnitt (12) der Absturzsicherung (5) angeordnet ist und/oder wobei insbesondere die Kopplungstraverse (50) in dem zweiten Abschnitt (54) mittels der Befestigungsvorrichtung (16) mit dem Sockelabschnitt (12) der Absturzsicherung (5) verbindbar oder verbunden ist.

4. Dachsystem (1) nach einem der Ansprüche 1 bis 3, **dadurch gekennzeichnet, dass** die Modulstützen (20) jeweils mindestens zwei Einschuböffnungen (28) zum Einschieben einer Kopplungstraverse (50) aufweisen, wobei insbesondere die Einschuböffnungen (28) mindestens einer Modulstütze (20) ein, vorzugweise eine rechteckige oder eine Torbogen-förmige Grundform aufweisendes, Innenprofil (30) aufweisen.

5. Dachsystem (1) nach einem der Ansprüche 1 bis 4, **dadurch gekennzeichnet, dass** mindestens eine Modulstütze (20), insbesondere an der Unterseite (24) der Modulstütze (20), eine Dachbefestigungseinrichtung (32) zur Befestigung der Modulstütze (20) an der Dachfläche, insbesondere eine Bohrung, aufweist.

6. Dachsystem (1) nach einem der Ansprüche 1 bis 5, **dadurch gekennzeichnet, dass** die Auflageflächen (26) zum Auflegen eines Photovoltaikmoduls (60) an der Oberseite (25) der Modulstützen (20) zur Dachfläche einen Winkel von mehr als 0 Grad und weniger als 30 Grad, insbesondere mehr als 5 Grad und weniger als 15 Grad, aufweisen.

7. Dachsystem (1) nach einem der Ansprüche 1 bis 6, **dadurch gekennzeichnet, dass** die Modulstützen (20) an der Oberseite (25) mehrere Auflageflächen (26) aufweisen, wobei jede Auflagefläche (26) zum Auflegen mindestens eines Photovoltaikmoduls (60) vorgesehen ist.

8. Dachsystem (1) nach einem der Ansprüche 1 bis 7, **dadurch gekennzeichnet, dass** mindestens eine Modulstütze (20) eine Modulbefestigungsvorrichtung (34) zur Befestigung eines Photovoltaikmoduls (60) aufweist, wobei insbesondere die Modulbefestigungsvorrichtung (34) als Klemmvorrichtung (36) zum Festklemmen eines auf die Modulstütze (20) aufgelegten Photovoltaikmoduls (60) ausgebildet ist, wobei insbesondere die Klemmvorrichtung (36) eine Klemmschiene (38) mit einem form- und/oder funktionskomplementären Klemmsteg aufweist.

9. Dachsystem (1) nach einem der Ansprüche 1 bis 8, **dadurch gekennzeichnet, dass** das Dachsystem (1) mindestens zwei eine unterschiedliche Form aufweisende Modulstützen (20) umfasst, wobei insbesondere mindestens eine Modulstütze (20) als Eckmodulstütze mit zwei senkrecht zueinander angeordneten Einschuböffnungen (28) ausgebildet ist und/oder wobei insbesondere mindestens eine erste Modulstütze (20) eine andere Höhe aufweist als eine zweite Modulstütze (20).

10. Dachsystem (1) nach einem der Ansprüche 1 bis 9, **dadurch gekennzeichnet, dass** das Dachsystem (1) mindestens zwei, insbesondere stabförmige, Kopplungstraversen (50) aufweist, wobei die mindestens zwei Kopplungstraversen (50) jeweils mit einer Modulstütze (20) verbindbar oder verbunden sind und mit dem Sockelabschnitt (12) der Absturzsicherung (5) verbindbar oder verbunden sind, wobei insbesondere die mindestens zwei Kopplungstraversen (50) parallel oder senkrecht zueinander angeordnet sind, wobei insbesondere eine Kopplungstraverse (50) mit zwei Modulstützen (20) verbindbar oder verbunden ist.

11. Dachsystem (1) nach einem der Ansprüche 1 bis 10, **dadurch gekennzeichnet, dass** die Absturzsicherung (5), insbesondere Absturzsicherungsgestell (6), mehrere Absturzsicherungsgestellsegmente (7) umfasst, wobei mindestens ein Absturzsicherungsgestellsegmente (7) bewegbar, insbesondere klappbar und/oder in der Dachfläche versenkbar, ausgebildet ist, wobei insbesondere das mindestens eine bewegbare Absturzsicherungsgestellsegment (7) mittels einer, insbesondere elektrischen oder elektronischen, Steuereinheit bewegbar ist, wobei insbesondere die Steuereinheit eine Aktuatorikeinheit zum Bewegen des mindestens einen bewegbaren Absturzsicherungsgestellsegments (7) aufweist.

12. Dachsystem (1) nach einem der Ansprüche 1 bis 11, **dadurch gekennzeichnet, dass** das Dachsystem (1) mindestens eine, insbesondere mechanische oder elektrische oder elektronische, Dachpositionierungsüberwachungseinrichtung zum Überwachen der Positionierung des Dachsystems (1) auf der Dachfläche aufweist.

13. Dachsystem (1) nach einem der Ansprüche 1 bis 12, **dadurch gekennzeichnet, dass** das Dachsystem (1) eine mindestens einen Systemkontrollsensor aufweisende Systemkontrolleinheit zum Messen und/oder Verarbeiten und/oder Übertragen von Systemkontrollsensordaten aufweist, wobei insbesondere mittels des mindestens einen Systemkontrollsensors Betriebsparameter des Dachsystems (1) und/oder eines Photovoltaikmoduls (60) und/oder meteorologische Parameter messbar sind, wobei insbesondere die Systemkontrollsensordaten von der Systemkontrolleinheit an die Steuereinheit und/oder die Aktuatorikeinheit übermittelbar sind.

14. Dachsystem (1) nach einem der Ansprüche 1 bis 13, **dadurch gekennzeichnet, dass** das Dachsystem (1) ein Photovoltaikmodul (60) oder mehrere Photovoltaikmodule (60) umfasst, wobei das Photovoltaikmodul (60) oder die mehreren Photovoltaikmodule (60) auf den Modulstützen (20) auflegbar oder aufgelegt ist oder sind, wobei insbesondere mehrere, insbesondere benachbarte, Photovoltaikmodule (60) eine ebene Fläche bildend auf den Modulstützen (20) auflegbar oder aufgelegt sind.

15. Verwendung eines Dachsystems (1) nach einem der Ansprüche 1 bis 14 zur Anordnung von einer Absturzsicherung (5), insbesondere einem Absturzsicherungsgestell (6), und einem Photovoltaikmodul (60) oder mehreren Photovoltaikmodulen (60) auf einer Dachfläche, insbesondere einem Flachdach.

## Claims

1. A roof system (1) for at least one photovoltaic module (60), wherein the roof system (1) can be or is arranged on a roof surface, in particular a flat roof, wherein the roof system (1) has a fall prevention device (5), in particular a fall prevention frame (6), wherein the fall prevention device (5) has a pedestal portion (12) facing the roof surface, wherein in particular the fall prevention device (5) has a functional portion (13) facing away from the roof surface, wherein the roof system (1) has multiple module supports (20) for supporting at least one photovoltaic module (60), wherein the module supports (20) can be or are each arranged with an underside (24) on the roof surface and the module supports (20) each have a locating surface (26) on an upper side (25) for locating a photovoltaic module (60), wherein the roof system (1) has at least one, in particular rod-shaped, coupling cross-member (50) for coupling the fall prevention device (5) to a module support (20), wherein the at least one coupling cross-member (50), in a first portion (52), can be or is connected to a module support (20), and wherein the at least one coupling cross-member (50), in a second portion (54), can be or is connected to the pedestal portion (12) of the fall prevention device (5), wherein the module supports (20) each have at least one insertion opening (28) for inserting a coupling cross-member (50), wherein the at least one coupling cross-member (50), in the first portion (52), is or can be inserted into the at least one insertion opening (28) in a manner complementary in shape and/or function, wherein in particular the insertion opening (28) of at least one module support (20) has an inner profile (30) preferably having a rectangular or an archway-shaped basic form.

2. The roof system (1) according to Claim 1, **characterized in that** the module supports (20) are manufactured from metal, in particular steel and/or aluminum, and/or plastic, and/or **in that** the fall prevention device (5) is manufactured from metal, in particular steel and/or aluminum, and/or plastic, and/or **in that** the at least one coupling cross-member (50) is manufactured from metal, in particular steel and/or aluminum, and/or plastic.

3. The roof system (1) according to Claim 1 or 2, **characterized in that** the fall prevention device (5) has at least one fastening device (16), in particular a folding mechanism, for fastening a coupling cross-member (50) to the fall prevention device (5), wherein in particular the fastening device (16) is arranged in the pedestal portion (12) of the fall prevention device (5), and/or wherein in particular the coupling cross-member (50), in the second portion (54), can be or is connected to the pedestal portion (12) of the fall prevention device (5) by means of the fastening device (16).

4. The roof system (1) according to any one of Claims 1 to 3, **characterized in that** the module supports (20) each have at least two insertion openings (28) for inserting a coupling cross-member (50), wherein in particular the insertion openings (28) of at least one module support (20) have an inner profile (30) preferably having a rectangular or an archway-shaped basic form.

5. The roof system (1) according to any one of Claims 1 to 4, **characterized in that** at least one module support (20), in particular on the underside (24) of the module support (20), has a roof fastening apparatus (32) for fastening the module support (20) to the roof surface, in particular a bore.

6. The roof system (1) according to any one of Claims 1 to 5, **characterized in that** the locating surfaces (26) for locating a photovoltaic module (60) on the upper side (25) of the module supports (20) have an angle of more than 0 degrees and less than 30 degrees, in particular more than 5 degrees and less than 15 degrees, to the roof surface.

7. The roof system (1) according to any one of Claims 1 to 6, **characterized in that** the module supports (20) have multiple locating surfaces (26) on the upper side (25), wherein each locating surface (26) is provided for locating at least one photovoltaic module (60).

8. The roof system (1) according to any one of Claims 1 to 7, **characterized in that** at least one module support (20) has a module fastening device (34) for fastening a photovoltaic module (60), wherein in particular the module fastening device (34) is configured as a clamping device (36) for clamping a photovoltaic module (60) located on the module support (20), wherein in particular the clamping device (36) has a clamping rail (38) with a clamping crosspiece which is complementary in shape and/or function.

9. The roof system (1) according to any one of Claims 1 to 8, **characterized in that** the roof system (1) comprises at least two module supports (20) having a different form, wherein in particular at least one module support (20) is configured as a corner module support with two insertion openings (28) arranged perpendicular to one another, and/or wherein in particular at least one first module support (20) has a different height to a second module support (20).

10. The roof system (1) according to any one of Claims 1 to 9, **characterized in that** the roof system (1) has at least two, in particular rod-shaped, coupling cross-members (50), wherein the at least two coupling cross-members (50) can be or are each connected to a module support (20) and can be are connected to the pedestal portion (12) of the fall prevention device (5), wherein in particular the at least two coupling cross-members (50) are arranged parallel or perpendicular to one another, wherein in particular a coupling cross-member (50) can be or is connected to two module supports (20).

11. The roof system (1) according to any one of Claims 1 to 10, **characterized in that** the fall prevention device (5), in particular fall prevention frame (6), comprises multiple fall prevention frame segments (7), wherein at least one fall prevention frame segments (7) is configured to be movable, in particular foldable and/or retractable in the roof surface, wherein in particular the at least one movable fall prevention frame segment (7) is movable by means of a, in particular electrical or electronic, control unit, wherein in particular the control unit has an actuator unit for moving the at least one movable fall prevention frame segment (7).

12. The roof system (1) according to any one of Claims 1 to 11, **characterized in that** the roof system (1) has at least one, in particular mechanical or electrical or electronic, roof positioning monitoring device for monitoring the positioning of the roof system (1) on the roof surface.

13. The roof system (1) according to any one of Claims 1 to 12, **characterized in that** the roof system (1) has a system control unit having at least one system control sensor for measuring and/or processing and/or transferring system control sensor data, wherein operating parameters of the roof system (1) and/or of a photovoltaic module (60) and/or meteorological parameters can be measured in particular by means of the at least one system control sensor, wherein in particular the system control sensor data can be transmitted by the system control unit to the control unit and/or the actuator unit.

14. The roof system (1) according to any one of Claims 1 to 13, **characterized in that** the roof system (1) comprises one photovoltaic module (60) or multiple photovoltaic modules (60), wherein the photovoltaic module (60) or the multiple photovoltaic modules (60) can be or is or are located on the module supports (20), wherein in particular multiple, in particular adjacent, photovoltaic modules (60) can be or are located on the module supports (20), forming a flat surface.

15. Use of a roof system (1) according to any one of Claims 1 to 14 for arranging a fall prevention device (5), in particular a fall prevention frame (6), and one photovoltaic module (60) or multiple photovoltaic modules (60) on a roof surface, in particular a flat roof.

## Revendications

1. Système pour toiture (1) pour au moins un module photovoltaïque (60), le système pour toiture (1) étant apte à être agencé ou étant agencé sur une surface de toiture, en particulier un toit plat, le système pour toiture (1) présentant un dispositif antichute (5), en particulier une structure antichute (6), le dispositif antichute (5) présentant une partie de base (12) tournée vers la surface de toiture, le dispositif antichute (5) présentant en particulier une partie fonctionnelle (13) située à l'opposé de la surface de toiture, le système pour toiture (1) présentant plusieurs supports de module (20) pour supporter au moins un module photovoltaïque (60), les supports de module (20) étant aptes à être agencés ou étant agencés chacun avec une face inférieure (24) sur la surface du toit, et les supports de module (20) présentant chacun, sur une face supérieure (25), une surface d'appui (26) pour recevoir un module photovoltaïque (60), le système pour toiture (1) comprenant au moins une traverse de liaison (50), en particulier en forme de barre, pour relier le dispositif antichute (5) à un support de module (20), ladite au moins une traverse de liaison (50) étant apte à être reliée ou étant reliée, dans une première section (52), à un support de module (20) et ladite au moins une traverse de liaison (50) étant apte à être reliée ou étant reliée, dans une deuxième section (54), à la partie de base (12) du dispositif antichute (5), les supports de modules (20) présentant chacun au moins une ouverture d'insertion (28) pour l'insertion d'une traverse de liaison (50), ladite au moins une traverse de liaison (50) étant apte à être insérée ou étant insérée au niveau de la première section (52), de manière complémentaire en termes de forme et/ou de fonction, dans ladite au moins une ouverture d'insertion (28), l'ouverture d'insertion (28) d'au moins un support de module (20) présentant en particulier un profilé intérieur (30) de forme de base de préférence rectangulaire ou arquée.

2. Système pour toiture (1) selon la revendication 1, **caractérisé en ce que** les supports de module (20) sont fabriqués en métal, en particulier en acier et/ou en aluminium, et/ou en matière plastique, et/ou **en ce que** le dispositif antichute (5) est fabriqué en métal, en particulier en acier et/ou en aluminium, et/ou en matière plastique, et/ou **en ce que** ladite au moins une traverse de liaison (50) est fabriquée en métal, en particulier en acier et/ou en aluminium, et/ou en matière plastique.

3. Système pour toiture (1) selon la revendication 1 ou la revendication 2, **caractérisé en ce que** le dispositif antichute (5) présente au moins un dispositif de fixation (16), en particulier un mécanisme de pliage, pour fixer une traverse de liaison (50) au dispositif antichute (5), le dispositif de fixation (16) étant notamment agencé dans la partie de base (12) du dispositif antichute (5) et/ou la traverse de liaison (50) étant notamment apte à être reliée ou étant reliée, au niveau de la deuxième partie (54), à la partie de base (12) du dispositif antichute (5) au moyen du dispositif de fixation (16).

4. Système pour toiture (1) selon l'une des revendications 1 à 3, **caractérisé en ce que** les supports de module (20) présentent chacun au moins deux ouvertures d'insertion (28) pour recevoir par insertion une traverse de liaison (50), les ouvertures d'insertion (28) d'au moins un support de module (20) comprenant en particulier un profilé intérieur (30) présentant une forme de base en forme de préférence rectangulaire ou cintrée.

5. Système pour toiture (1) selon l'une des revendications 1 à 4, **caractérisé en ce qu'**au moins un support de module (20), en particulier sur la face inférieure (24) du support de module (20), présente un dispositif (32) de fixation au toit, en particulier un alésage, pour fixer le support de module (20) à la surface du toit.

6. Système pour toiture (1) selon l'une des revendications 1 à 5, **caractérisé en ce que** les surfaces d'appui (26) destinées à supporter un module photovoltaïque (60) sur la face supérieure (25) des supports de module (20) forment un angle supérieur à 0 degré et inférieur à 30 degrés, en particulier supérieur à 5 degrés et inférieur à 15 degrés, avec la surface du toit.

7. Système pour toiture (1) selon l'une des revendications 1 à 6, **caractérisé en ce que** les supports de module (20) présentent plusieurs surfaces d'appui (26) sur leur face supérieure (25), chaque surface d'appui (26) étant prévue pour supporter au moins un module photovoltaïque (60).

8. Système pour toiture (1) selon l'une des revendications 1 à 7, **caractérisé en ce qu'**au moins un support de module (20) présente un dispositif (34) de fixation de module pour fixer un module photovoltaïque (60), le dispositif (34) de fixation de module étant notamment conçu sous la forme d'un dispositif de serrage (36) pour serrer un module photovoltaïque (60) placé sur le support de module (20), le dispositif de serrage (36) présentant en particulier un rail de serrage (38) avec une nervure de serrage de forme et/ou de fonction complémentaire.

9. Système pour toiture (1) selon l'une des revendications 1 à 8, **caractérisé en ce que** le système pour toiture (1) comprend au moins deux supports de module (20) de formes différentes, au moins un support de module (20) étant notamment conçu sous la forme d'un support d'angle ayant deux ouvertures d'insertion (28) agencées perpendiculairement l'une par rapport à l'autre et/ou au moins un premier support de module (20) présentant notamment une hauteur différente de celle d'un deuxième support de module (20).

10. Système pour toiture (1) selon l'une des revendications 1 à 9, **caractérisé en ce que** le système pour toiture (1) présente au moins deux traverses de liaison (50), en particulier en forme de barres, lesdites au moins deux traverses de liaison (50) étant aptes à être reliées ou étant reliées chacune à un support de module (20) et sont reliées ou sont aptes à être reliées à la partie de base (12) du dispositif antichute (5), lesdites au moins deux traverses de liaison (50) étant notamment agencées parallèlement ou perpendiculairement les unes aux autres, une traverse de liaison (50) étant notamment reliée ou apte à être reliée à deux supports de module (20).

11. Système pour toiture (1) selon l'une des revendications 1 à 10, **caractérisé en ce que** le dispositif antichute (5), en particulier la structure antichute (6), comprend plusieurs segments (7) de structure antichute, au moins un segment (7) de structure antichute étant mobile, en particulier rabattable et/ou escamotable dans la surface du toit, ledit au moins un segment (7) de structure antichute mobile étant mobile au moyen d'une unité de commande, en particulier électrique ou électronique, l'unité de commande présentant en particulier une unité d'actionnement pour déplacer ledit au moins un segment (7) de structure antichute mobile.

12. Système pour toiture (1) selon l'une des revendications 1 à 11, **caractérisé en ce que** le système pour toiture (1) comprend au moins un dispositif de surveillance du positionnement de la toiture, en particulier mécanique, électrique ou électronique, pour surveiller le positionnement du système pour toiture (1) sur la surface du toit.

13. Système pour toiture (1) selon l'une des revendications 1 à 12, **caractérisé en ce que** le système pour toiture (1) comprend une unité de commande du système présentant au moins un capteur de commande du système pour mesurer et/ou traiter et/ou transmettre des données du capteur de commande du système, des paramètres de fonctionnement du système pour toiture (1) et/ou d'un module photovoltaïque (60) et/ou des paramètres météorologiques étant mesurés, les données du capteur de commande du système étant notamment transmissibles de l'unité de commande du système à l'unité de commande et/ou à l'unité d'actionnement.

14. Système pour toiture (1) selon l'une des revendications 1 à 13, **caractérisé en ce que** le système pour toiture (1) comprend un module photovoltaïque (60) ou plusieurs modules photovoltaïques (60), le module photovoltaïque (60) ou les plusieurs modules photovoltaïques (60) étant placés ou aptes à être placés sur les supports de modules (20), plusieurs modules photovoltaïques (60), en particulier adjacents, formant une surface plane sur les supports de modules (20).

15. Utilisation d'un système pour toiture (1) selon l'une des revendications 1 à 14 pour l'installation d'un dispositif antichute (5), en particulier une structure antichute (6), et un module photovoltaïque (60) ou plusieurs modules photovoltaïques (60) sur une surface de toiture, en particulier un toit plat.
